# EUROPEAN PATENT SPECIFICATION

(11) **EP 2 284 530 B1**
(45) Date of publication and mention of the grant of the patent: **31.08.2016**
(21) Application number: 10425145.9
(22) Date of filing: 03.05.2010
(51) Int. Cl.: G01N 31/12

(54) **Tube-in-tube assembly device for pyrolysis reactor for high temperature conversion**
Rohr-im-Rohr-System für Pyrolysereaktor für Hochtemperaturkonvertierung
Système à tubes doubles pour réacteur à pyrolyse pour conversion haute température

(30) Priority: 07.08.2009 IT MI20091439
(43) Date of publication of application: 16.02.2011
(73) Proprietor: Eurovector S.p.A., 20144 Milano (IT)
(72) Inventor: Sisti, Leonardo, 27040 Montalto Pavese, Pavia (IT)
(74) Representative: Leihkauf, Steffen Falk

(56) References cited:
- FR-A1- 2 734 363
- GB-A- 1 439 469
- US-A- 5 236 353
- US-A- 5 866 072
- M. GEHRE ET AL.: "Contnuous flow 2H/1H and 18O/16O analysis of water samples with dual inlet precision" RAPID COMMUNICATIONS IN MASS SPECTROSCOPY, vol. 18, 2004, pages 2650-2660, XP002571393 DOI: 10.1002/rcm.1672

## Description

The present invention relates to a tube-in-tube assembly device for a pyrolytic unit of an automatic elemental analyzer.

An elemental analyzer is an instrument intended to analyze elemental composition in solid and liquid samples by so called High Temperature Conversion (HTC), particularly in presence of carbon based reduction materials.

The elemental analyzer includes a pyrolytic unit as a part of the elemental analyzer or as satellite unit self standing. In both cases, the pyrolytic unit includes a sampler, particularly a so called Zero Blank Auto Sampler, granting zero air contamination, having the function of automatically introducing the sample, preferably housed in a silver cap, by gravity into a reactor containing the carbon based reaction material, where the High Temperature Conversion takes place due to the reaction between the sample and the carbon based material. Particularly, the reaction takes place in a heated zone, so called Hot Zone. To this purpose, the pyrolitic unit comprises a furnace allowing an accurate control of the temperature in the Hot Zone.

Particularly, the reactor includes two tubes coaxially assembled including an outer Alumina (Al₂O₃) tube and an inner glassy carbon tube shorter than the outer tube. The outer alumina tube acts as a case for protecting the inner glassy carbon tube from air oxidation. The glassy carbon tube is filled with glassy carbon chips and reactive carbon, depending on temperature in Hot Zone. The sample to be analyzed sealed in the silver capsule drops by gravity into the inner glassy carbon tube at high temperature so that the reaction material can react with the samples generating molecular hydrogen H₂, molecular nitrogen N₂ (from samples with N-bearing material) and carbon monoxide CO from oxygen in the samples. This gas mixture then flows through a trap interposed between the outlet of the coaxial arrangement and a gas chromatography column for time separation of molecular hydrogen H₂, molecular nitrogen N₂ and carbon monoxide CO peaks. Finally, the molecular hydrogen H₂, molecular nitrogen N₂ and carbon monoxide CO peaks enter into a mass spectrometer via an open split to provide isotopic ratios of each element to be analyzed.

This known system is not however without drawbacks.

The reaction takes place in a continuous flow of an inert gas such as helium. At the entering of the coaxial arrangement the carrier gas is split in two portions. A first portion flows in the space between the wall of the Alumina outer tube and the wall of the glassy carbon inner tube, whilst a second portion flows inside the glassy carbon inner tube where the carbon based reaction material is provided. The two carrier gas flows are then unified again within the coaxially assembled tube at the bottom of the glassy carbon inner tube before leaving the coaxial arrangement. Hence, the flow coming out from the glassy carbon inner tube is contaminated by the flow of inert gas flowing within the space between the inner and the outer tubes carrying forward the reaction products between alumina and glassy carbon tube in which the carbon monoxide CO is formed with different isotopic composition from the carbon monoxide obtained from the sampled analyzed, according to the following reaction:

Al₂O₃ + 3C → 2Al + 3CO.

In other words, the carbon monoxide CO comes both from Alumina and not solely from the samples.

This problem is emphasized at high temperatures. Particularly, for samples such nitrates, silicates or carbonates temperature exceeding 1400 °C up to 1500°C or more are used. Oxygen isotopic composition resulting from the analysis is therefore affected by the temperature and is higher for the categories of samples that require higher temperatures. FR 2734363A1 describes an example of the above discussed prior art reactors.

The object of the present invention is therefore to provide a device suitable to at least partially overcome the drawbacks cited with reference to the known prior art.

Particularly, it is an object of the present invention to provide a device such that the isotopic ratios of elements analyzed are not contaminated.

This and other objects are achieved by a tube-in-tube assembly device according to claim 1. Each of the dependant claims defines a possible embodiment of the tube-in-tube assembly device according to the invention.

In order to better understand the invention and appreciate the advantages thereof, some exemplary, non-limiting embodiments thereof will be described below, with reference to the annexed figures, in which:
Fig. 1 is schematic side view of a tube-in-tube assembly device according to the invention;
Fig. 2 is a functional schematic view of an elemental analyzer comprising a tube-in-tube assembly device according to the invention.

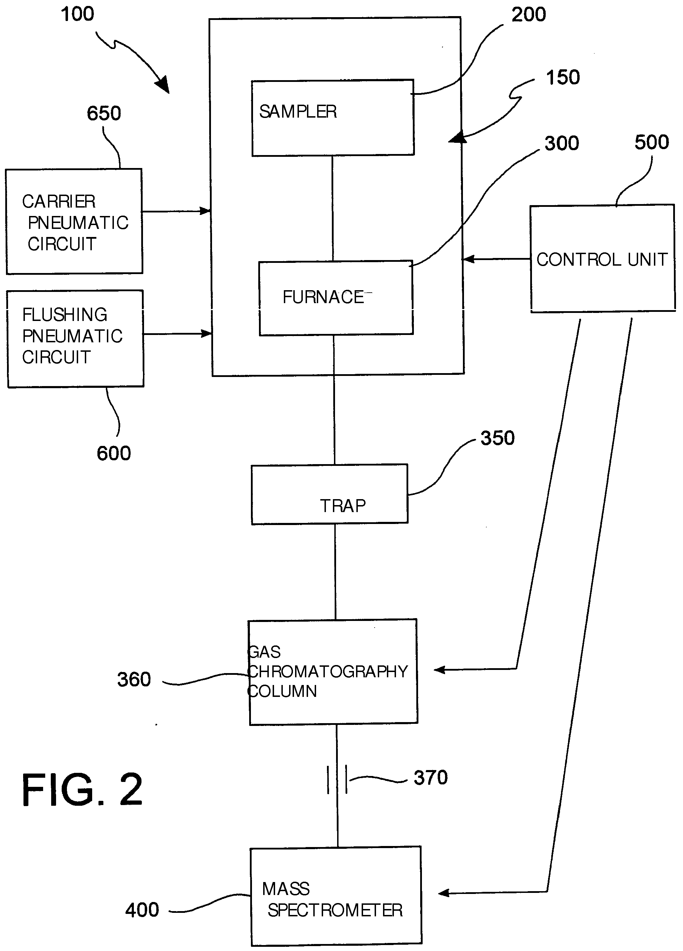

With reference to the annexed figure 2, an elemental analyzer is indicated with the reference number 100.

The elemental analyzer 100 is an instrument intended to analyze elemental composition in solid and liquid samples. The elemental analyzer includes a pyrolytic unit 150, which may be part of the elemental analyzer or as satellite unit self standing. The pyrolytic unit 150 includes a sampler 200 having the function of automatically introducing the sample, preferably housed in a silver cap, by gravity into a reactor containing a carbon based reaction material, where a reaction, particularly a so called High Temperature Conversion HTS, takes place due to the reaction between the sample and the carbon based material. Preferably, the sampler 200 is a so called Zero Blank Auto Sampler, which is able to grant zero air contamination. The High Temperature Conversion takes place in a heated zone, so called Hot Zone HZ (preferably set from 900°C up to 1500°C or more). To this purpose, the pyrolitic unit comprises a furnace 300, preferably of the radiant type.

The reaction between the reaction material and the sample usually results in molecular hydrogen H₂ and/or molecular nitrogen N₂ and/or carbon monoxide CO from oxygen in the samples. This gas mixture then flows through an adsorbing trap 350 (preferably including ascarite to eliminate unwanted acidic gas and/or anydrone as a precaution to eliminate water) and a gas chromatography column 360 for time separation of molecular hydrogen H₂, molecular nitrogen N₂ and carbon monoxide CO peaks. Finally, the molecular hydrogen H₂, molecular nitrogen N₂ and carbon monoxide CO peaks enter into a mass spectrometer 400 via an open split 370 to provide isotopic ratios of each element to be analyzed.

The present invention is particularly focalized to the reactor in which the reaction between the sample and the reaction material occurs. This reactor is in the form of a tube-in-tube assembly device.

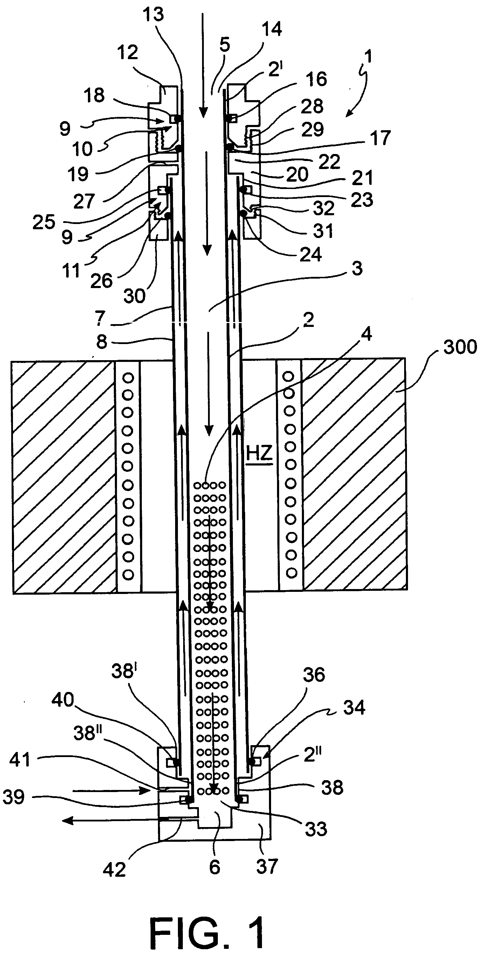

With reference now to the annexed figure 1, a tube-in-tube assembly device is indicated with the reference number 1.

The tube-in-tube assembly device 1 comprises an inner tube 2 which defines a reaction duct 3 through which the samples sealed in the silver caps drop for gravity from the sampler, preferably carried by an inert carrier gas, for example Helium or Argon. The inner tube 2 has a reaction duct inlet 5, through which the samples are inserted into the reaction duct, and a reaction duct outlet 6, from which the gases resulting from the reactions of the sample with the reaction material inside the reaction duct 3 exit from the tube-in-tube assembly device.

Particularly, the tube-in-tube assembly device 1 is at least partially filled with a carbon based reaction material 4. The reaction material is in the Hot Zone HZ of the tube-in-tube assembly device, i.e. in a position of the latter where it can be heated at high temperatures (usually set from 900°C up to 1.500°C or more). In this manner, the carbon based reaction material reacts with the samples (which may be organic or inorganic), thereby reducing the elements in the sample such as hydrogen, nitrogen and oxygen into molecular nitrogen N₂, carbon monoxide CO, or molecular hydrogen H₂. The reaction material 4 may comprise glassy carbon chips, which are suitable for temperatures higher than 1450°C. For temperatures less than 1450°C the reaction material may comprise for example nickelized carbon or amorphous carbon in granules not nickelized, or graphite in granules. Preferably, the tubular wall of the inner tube 2 is made of glassy carbon or silicon carbide.

The tube-in-tube assembly device 1 further comprises an outer tube 7 defining a duct in which the inner tube 2 is at least partially arranged. Particularly, the outer tube 7 acts as a case for the inner tube 2 so to protect the latter from air oxidation. Preferably, the inner tube 2 protrudes from the inner tube at the two ends thereof, particularly has a projecting portion 2' at an end 14 corresponding to the reaction duct inlet 5 and a projecting portion 2" at an opposite end 33 corresponding to the reaction duct outlet 6. The outer tube 7 is preferably made of alumina.

Advantageously, in assembled condition of the tube-in-tube assembly device 1, the inner tube 2 and the outer tube 7 are mutually arranged such that a flushing space 8, preferably an annular flushing space 8 is formed between the inner and the outer tubes. With further advantage, the inner and the outer tubes are coaxially arranged.

The flushing space 8 is intended for the flowing of a flushing gas, particularly an inert gas, preferably Helium or Argon, between the outer tube 7 and the inner tube 2. As will be described hereinafter in more detail, the flowing of the inert gas allows to eliminate residues of carbon monoxide CO resulting from the alumina wall of the outer tube and to vent it, thereby assuring that the isotopic ratios of elements analyzed are not contaminated and that the background in the mass spectrometer is normal.

The tube-in-tube assembly device 1 further comprises sealing means 9. These sealing means 9 provide a gas seal between the flushing space 8 and the reaction duct 3, which are therefore fully separated one to another. In this manner, the flow of the carrier gas is completely separated from the flow of the flushing gas. The two flows can be therefore independently regulated. Particularly, the flow of flushing gas can be completely and continuously vented and the flow of carrier gas with gas mixture resulting from the reaction of the sample with the reaction material can reach the mass spectrometer without entering in contact with the flushing gas, thereby being analyzed non contaminated.

In accordance with an embodiment, the sealing means 9 comprise first sealing means 10 and/or (preferably both) second sealing means 11.

The first sealing means 10 act externally, i.e. on the outer face of the tubular wall forming the tube, on the inner tube 2. The first sealing means 10 are advantageously configured so to provide a gas seal between the reaction duct 3 and the flushing space 8.

The second sealing means 11 act externally on the outer tube 7, i.e. act on the external face of the tubular wall forming the outer tube. The second sealing means 11 are advantageously configured so that a gas seal is provided between the environment external to the tube-in-tube assembly device 1 and the flushing space 8. It is therefore avoided the entering of further contaminants into the flushing space 8 which may enter into the mass spectrometer 400 flowing through the flushing space 8.

In accordance with a possible embodiment of the invention, the tube-in-tube assembly device 1 comprises a first connection element 12 comprising a tubular body delimiting an internal tube seat 13 suitable to accommodate the inner tube 2. The internal tube seat 13 is configured such that the inner tube can be inserted into the internal tube seat 13 at one end in a predetermined position.

With further advantage, the first connection element 12 comprises one or more seal externally acting on the inner tube, thereby realizing the first sealing means 10. Preferably, it comprises two O-rings 16 and 17 accommodated in respective O-ring seats 18 and 19 formed in the first connection element 12.

According to an embodiment, the tube-in-tube assembly device 1 comprises a second connection element 20 comprising a tubular body delimiting an outer tube seat 21 suitable to accommodate the outer tube 7. The outer tube seat is configured such that the outer tube 7 can be inserted into the outer tube seat 21 at one end in predetermined position. To this purpose, the second connection element 20 advantageously comprises an annular portion 22 projecting radially in the outer tube seat 21.

With further advantage, the second connection element 20 comprises one or more seal externally acting on the outer tube 7, thereby realizing the second sealing means 11. Preferably, the second sealing means comprise two O-rings 23 and 24 accommodated in respective O-ring seats 25 and 26 formed in the second connection element 20 at the outer tube seat 21. The O-rings 23 and 24 and the respective O-ring seats 25 and 26 are advantageously positioned respectively near the annular portion 22 and the end of the second connection element opposite to the annular portion 22.

Advantageously, the second connection element 20 comprises, particularly forms, a flushing exit 27 for the exit of the flushing gas from the flushing space 8. To this aim, the flushing exit 27 is in fluid connection with the flushing space 8. Preferably, the flushing exit 27 is formed in the annular portion 22 of the second connection element and such fluid connection is realized in the annular space between the outer tube 7 and the wall delimiting the outer tube seat 21.

It has to be noted that, according to this configuration, the flushing exit 27 is arranged between the second O-ring 17 of the first connection element 12 and the first O-ring 23 of the second connection element 20, so that the path of the inert gas is substantially sealed at its exit.

According to an embodiment, the first 12 and the second 20 connection elements are reversibly connectable one to another. Preferably the first connection element comprises a first thread 28 and the second connection element 20 comprises a second thread 29 so that the first 12 and the second 20 elements can be screwed one to another.

Advantageously, the first 12 and the second 20 connection elements are configured such that after connection, particularly after screwing, the O-rings 16 and 17 of the first connection element 12 are externally pressed onto the inner tube 2. In this manner, the sealing is still more reliable and the inner tube 2 is firmly fixed in the inner tube seat 13 of the first connection element 12.

In accordance with a possible embodiment, the tube-in-tube assembly device 1 comprises a third connection element 30 reversibly connectable to the second connection element 20. Preferably the second connection element 20 comprises a third thread 31 and the third connection element 30 comprises a fourth thread 32, so that the second 20 and the third 30 connection element can be screwed one to another. Advantageously, the second 20 and the third 30 connection elements are configured such that, after connection, particularly after screwing, the first 23 and the second 24 O-rings are externally pressed onto the outer tube 7. In this manner, the sealing is improved and the outer tube 7 is fixedly blocked in the outer tube seat 21 of the second connection element 20.

It has to be noted that the connecting means are advantageously configured so to keep the outer tube firmly in position as far as lateral shift is concerned, allowing a certain flexibility provided by the sealing means. Longitudinal shift is permitted in order to compensate for longitudinal expansion. The same applies to the inner tube.

The so configured tube-in-tube assembly device 1 can be inserted into the pyrolytic unit 150 and connected thereto.

Further means connect the tube-in-tube assembly device 1, particularly the inner 2 and the outer tubes 7, at the furnace at the end 33 of the tube-in-tube assembly device 1 opposite to the end 14. The connection means comprise further sealing means suitable to provide the flushing space 8 with a further gas seal.

Said further sealing means comprise third sealing means 34 externally acting on the inner tube 2 so to provide a gas seal between the reaction duct outlet 6 and the flushing space 8. Preferably, the third sealing means 34 comprise a seal, particularly an O-ring 39 acting on the outer surface of the tubular wall of the inner tube 2.

With further advantage, the sealing means comprise fourth sealing means 36 externally acting on the outer tube 7 so to provide a further gas seal between the environment external to the tube-in-tube assembly device 1 and the flushing space 8. According to an embodiment, the fourth sealing means 36 comprise a seal, particularly an O-ring 40, externally acting on the tubular wall forming the outer tube 7.

In accordance with an embodiment, the furnace 300 comprises a support element 37 delimiting a tube-in-tube assembly device seat 38 suitable to accommodate the tube-in-tube assembly device 1. Preferably, the tube-in-tube assembly device seat 38 comprises an outer tube seat 38' suitable to accommodate the outer tube 7 (and the inner tube 2 coaxially arranged thereto) and an inner tube seat 38" suitable to accommodate the inner tube 2, particularly the inferior projecting portion 2".

Advantageously, the inner tube seat 38' comprises the third sealing means 34, particularly the O-ring 39. Still more advantageously, the outer tube seat 38" comprises the fourth sealing means 36, particularly the O-ring 40.

Moreover, due to the presence of the O-rings 39 and 40, and due to the advantageous configuration of the support element 37, the tube-in-tube assembly device 1 can be press-fitted into the support element 37 itself, particularly in the tube-in-tube assembly device seat 38.

According to an advantageous embodiment, the support element 37 comprises, preferably forms, a flushing inlet 41. The flushing inlet 41 is in fluid connection with the flushing space 8, which in turn is in fluid connection with the flushing outlet 27 when the tube-in-tube assembly device 1 is inserted in the support element 37. In this manner, the inert flushing gas can enter through the flushing inlet 41, can flow through the flushing space 8 thereby washing the latter from carbon monoxide CO resulting from the alumina outer tube, and then exit from the flushing outlet 27. To this purpose, the pyrolytic unit 150 may be advantageously provided with or connectable to a pneumatic flushing circuit 600 connected with the flushing duct inlet 41. Still more advantagoesuly, the pyrolytic unit 150 may be provided with or connectable to a pneumatic carrier circuit 650 in fluid connection with the reaction duct inlet port 5. The pneumatic flushing circuit 600 and the pneumatic carrier circuit 650 are fully separated and can be controlled independently so to optimize the gaschromatography separation, the linear velocity in the reactor related to time of contact with the reaction material, the operating pressure and temperature. Moreover, the inert gas in the pneumatic flushing circuit can be vented continuously.

With further advantage, the support element 37 comprises, preferably forms, a samples gases outlet duct 42 in fluid connection with the reaction duct outlet 6 when the tube-in-tube assembly device 1 is connected to the support element 37. In this manner, the gases resulting from the reaction of the samples with the glassy carbon chips in the reaction duct 3 can exit from the furnace and go to the spectrometer.

It has to be noted that, advantageously, the pneumatic flushing circuit 600 and the pneumatic carrier circuit 650 are configured and connected or connectable to the tube-in-tube assembly device 1 and/or to the pyrolytic unit 150 in such a manner that the inert gas flowing in the reaction duct 3 and the inert gas flowing in the flushing space 8 are counter-current.

With reference now to figure 1, a possible method for assembling the tube-in-tube assembly device 1 will be described.

The method comprise a step of inserting the inner tube 2, previously provided with the reaction material 4, into the first connection element 12 on at the end 14.

Then, the second connection element 20, which is annular, is made slide along the inner tube 2 from the end 33 and screwed with the first connection element 12. In this manner, the O-rings 16 and 17 are pressed against the outer wall of the inner tube 2.

Then, the outer tube 7 is inserted into the outer tube seat 21 of the second connection element 20.

Then, the third connection element 30, which is annular, is made slide along the outer tube 7 from the end 14 and screwed with the second connection element 20. In this manner, the O-rings 23 and 24 are pressed against the outer wall of the outer tube 7.

At this stage, the tube-in-tube assembly device 1 is *per* se assembled and can be inserted as a whole into the tube-in-tube assembly device seat 38 of the support element 37 of the furnace, where it can be press-fitted.

From the above description, those skilled in the art will be able to appreciate how the tube-in-tube assembly device according to the invention allows a substantial elimination of the phenomenon of the background, particularly of carbon monoxide, thereby allowing to perform an accurate elemental analysis of the samples.

In fact, the flow of carrier gas is completely separated from the flow of flushing gas. The respective circuit can be therefore regulated independently allowing optimal set of respective pressure and flows. Moreover, the flow exiting from the reaction duct is non contaminated because the contact between the carrier gas and the flushing gas is completely eliminated.

Those skilled in the art, to the aim of meeting specific, contingent needs, will be able to make a number of adaptations, modifications, or replacements of elements with others functionally equivalent to the described embodiments of the tube-in-tube assembly device according to the invention, without for this departing from the scope of the annexed claims.

Each of the characteristics which are described as belonging to a possible embodiment can be implemented independently from the other embodiments described.

## Claims

1. A tube-in-tube assembly device (1) for a pyrolytic unit (150) of an elemental analyzer (100), comprising:
- an inner tube (2) internally defining a reaction duct (3) at least partially filled with a carbon based reaction material (4), wherein the reaction duct (3) has a reaction duct inlet (5) and a reaction duct outlet (6);
- an outer tube (7) acting as a case for said inner tube (2), the inner tube (2) being at least partially arranged inside the outer tube (7) such that a flushing space (8) is formed in the space between the inner (2) and the outer tubes (7), said flushing space (8) being intended for the flowing of a flushing gas;
- means (12, 20, 30) for connecting the outer tube (7) to the inner (2) tube at one end of the tube-in-tube assembly device (1), said connecting means (12, 20, 30) comprising sealing means (16, 17, 24, 23) suitable to provide a gas seal between the flushing space (8) and the reaction duct (3),
- further sealing means (34) arranged at a further end (33) of the tube-in-tube assembly device (1) and providing the flushing space (8) with a further gas seal, such that the reaction duct (3) is fully separated from the flushing space (8).

2. Tube-in-tube assembly device (1) according to claim 1, wherein said sealing means comprise first sealing means (10) externally acting on the inner tube (2) so to provide a gas seal between the reaction duct inlet (5) and the flushing space (8).

3. Tube-in-tube assembly device (1) according to claim 1 or 2, comprising second sealing means (11) externally acting on the outer tube (7) so to provide a gas seal between the environment external to the tube-in-tube assembly device (1) and the flushing space (8).

4. Tube-in-tube assembly device (1) according to any preceding claim, comprising a first connection element (12) delimiting an inner tube seat (13) suitable to accommodate said inner tube (2), the first connection element (12) comprising one or more seal (16, 17) externally acting on the inner tube (2).

5. Tube-in-tube assembly device (1) according to any preceding claim, comprising a second connection element (20) delimiting an outer tube seat (21) suitable to accommodate said outer tube (7), the second connection element (20) comprising one or more seal (23, 24) externally acting on the outer tube (7).

6. Tube-in-tube assembly device (1) according to claim 5 when dependant on claim 4, wherein said first (12) and second (20) connection elements are reversibly connectable one to another in such a manner that, after connection, the one or more seal (16, 17) of the first connection element (12) are externally pressed onto the inner tube (2).

7. Tube-in-tube assembly device (1) according to claim 5 or 6, wherein said second connection element (20) forms a flushing outlet (27) in fluid connection with said flushing space (8) for the exit of the flushing gas from the flushing space (8).

8. Tube-in-tube assembly device (1) according to the preceding claim, wherein said second connection element (20) is configured such that a space is provided between the inner tube (2) and the second connection element (20) for fluid connection of said flushing space (8) and said flushing outlet (27).

9. Tube-in-tube assembly device (1) according to any claim 5-8, comprising a third connection element (30) reversibly connectable to said second connection element (20) in such a manner that, after the connection, the one or more seal (23, 24) of the second connection element (20) are externally pressed onto the outer tube (7).

10. Tube-in-tube assembly device (1) according to any preceding claim, wherein the reaction material (4) comprises glassy carbon chips and/or nickelized carbon and/or not nickelized amorphous carbon in granules and/or or graphite in granules

11. Tube-in-tube assembly device (1) according to any preceding claim, wherein the inner tube (2) is made of glassy carbon or silicon carbide.

12. Tube-in-tube assembly device (1) according to any preceding claim, wherein the outer tube (7) is made of alumina.

13. Pyrolytic unit (150) for an elemental analyzer comprising a tube-in-tube assembly device (1) according to any preceding claim.

14. Pyrolytic unit (150) according to the preceding claim, comprising means for the connection of the outer (7) and the inner (2) tubes to the furnace (300) at a further end of the tube-in-tube assembly device (1), said connection means comprising sealing means (39, 40) suitable to provide the flushing space (8) with a further gas seal.

15. Pyrolytic unit (150) according to claim 14 wherein said sealing means comprise further sealing means (36) externally acting on the outer tube (7) so to provide a further gas seal between the environment external to the tube-in-tube assembly device (1) and the flushing space (8).

16. Pyrolytic unit (150) according to claim 14 or 15, comprising a support element (37) delimiting an inner tube seat (38") suitable to accommodate said inner tube (2) and an outer tube seat (38') suitable to accommodate said external tube (7), said inner tube seat (38") being provided with a seal (39) suitable to externally act on the inner tube (2) and said outer tube seat (38') being provided with a seal (40) suitable to externally act on the outer tube (7).

17. Pyrolytic unit (150) according to the preceding claim, wherein said support element (37) is configured such that the tube-in-tube assembly device (1) can be press-fitted into the support element (37) itself.

18. Pyrolytic unit (150) according to claim 17 wherein said support element (37) comprises a flushing inlet (41) in fluid connection with said flushing space (8) when the tube-in-tube assembly device (1) is connected to the support element (37).

19. Pyrolytic unit (150) according to any claim 17 or 18, wherein said support element (37) comprises a sample gases outlet duct (42) in fluid connection with said reaction duct outlet (6) for the exit from the tube-in-tube assembly device(1) of the gases resulting from the reaction of the samples with the reaction material (4).

20. Pyrolytic unit (150) according to any claim 19, comprising a pneumatic flushing circuit (600) connected with said flushing inlet (41) so to provide it with an inert gas for flushing the flushing space (8).

21. Pyrolytic unit (150) according to any preceding claim, comprising a pneumatic carrier circuit (650) connected with said reaction duct inlet (5) so to provide it with an inert gas for carrying the sample to be analyzed.

22. Pyrolytic unit (150) according to the preceding claim, wherein the pneumatic flushing circuit (600) and the pneumatic carrier circuit (650) are configured such that the flows of inert gas in the reaction duct (3) and in the flushing space (8) respectively are counter-current.

23. Pyrolytic unit (150) according to claim 22 wherein said pneumatic flushing circuit (600) and said pneumatic carrier circuit (650) are fully separated and independently controllable.

24. Elemental analyzer (100) comprising a pyrolytic unit (150) according to any claim 13-23.

## Patentansprüche

1. Röhre-in-Röhre-Anordnungsvorrichtung (1) für eine pyrolytische Einheit (150) eines Elementaranalysators (100), umfassend:
- eine innere Röhre (2), welche intern eine Reaktionsleitung (3) definiert, welche zumindest teilweise mit einem kohlenstoffbasierten Reaktionsmaterial (4) befüllt ist, wobei die Reaktionsleitung (3) einen Reaktionsleitungseinlass (5) und einen Reaktionsleitungsauslass (6) aufweist;
- eine äußere Röhre (7), welche als ein Gehäuse für die innere Röhre (2) dient, wobei die innere Röhre (2) derart wenigstens teilweise in der äußeren Röhre (7) angeordnet ist, dass ein Spülraum (8) in dem Raum zwischen der inneren (2) und der äußeren Röhre (7) gebildet ist, wobei der Spülraum (8) zum Strömen eines Spülgases bestimmt ist;
- Mittel (12, 20, 30) zum Verbinden der äußeren Röhre (7) mit der inneren (2) Röhre an einem Ende der Röhre-in-Röhre-Anordnungsvorrichtung (1), wobei die Verbindungsmittel (12, 20, 30) Dichtungsmittel (16, 17, 24, 23) umfassen, welche dazu geeignet sind, eine Gasdichtung zwischen dem Spülraum (8) und der Reaktionsleitung (3) bereitzustellen,
- weitere Dichtungsmittel (34), welche an einem weiteren Ende (33) der Röhre-in-Röhre-Anordnungsvorrichtung (1) angeordnet sind und den Spülraum (8) derart mit einer weiteren Gasdichtung versehen, dass die Reaktionsleitung (3) von dem Spülraum (8) vollständig getrennt ist.

2. Röhre-in-Röhre-Anordnungsvorrichtung (1) nach Anspruch 1, wobei die Dichtungsmittel erste Dichtungsmittel (10) umfassen, welche extern auf die innere Röhre (2) einwirken, um eine Gasdichtung zwischen dem Reaktionsleitungseinlass (5) und dem Spülraum (8) bereitzustellen.

3. Röhre-in-Röhre-Anordnungsvorrichtung (1) nach Anspruch 1 oder 2, umfassend zweite Dichtungsmittel (11), welche extern auf die äußere Röhre (7) einwirken, um eine Gasdichtung zwischen der zu der Röhre-in-Röhre-Anordnungsvorrichtung (1) externen Umgebung und dem Spülraum (8) bereitzustellen.

4. Röhre-in-Röhre-Anordnungsvorrichtung (1) nach einem der vorhergehenden Ansprüche, umfassend ein erstes Verbindungselement (12), welches einen Innere-Röhre-Sitz (13) begrenzt, welcher dazu geeignet ist, die innere Röhre (2) aufzunehmen, wobei das erste Verbindungselement (12) eine oder mehrere Dichtungen (16, 17) umfasst, welche extern auf die innere Röhre (2) einwirken.

5. Röhre-in-Röhre-Anordnungsvorrichtung (1) nach einem der vorhergehenden Ansprüche, umfassend ein zweites Verbindungselement (20), welches einen Äußere-Röhre-Sitz (21) begrenzt, welcher geeignet ist, die äußere Röhre (7) aufzunehmen, wobei das zweite Verbindungselement (20) eine oder mehrere Dichtungen (23, 24) umfasst, welche extern auf die äußere Röhre (7) einwirken.

6. Röhre-in-Röhre-Anordnungsvorrichtung (1) nach Anspruch 5, wenn abhängig von Anspruch 4, wobei das erste (12) und das zweite (20) Verbindungselement miteinander in einer derartigen Weise reversibel verbindbar sind, dass, nach einer Verbindung, die eine oder mehreren Dichtungen (16, 17) des ersten Verbindungselements (12) extern auf die innere Röhre (2) gedrückt sind.

7. Röhre-in-Röhre-Anordnungsvorrichtung (1) nach Anspruch 5 oder 6, wobei das zweite Verbindungselement (20) einen Spülauslass (27) in Fluidverbindung mit dem Spülraum (8) für den Austritt des Spülgases aus dem Spülraum (8) bildet.

8. Röhre-in-Röhre-Anordnungsvorrichtung (1) nach dem vorhergehenden Anspruch, wobei das zweite Verbindungselement (20) derart eingerichtet ist, dass ein Raum zwischen der inneren Röhre (2) und dem zweiten Verbindungselement (20) für eine Fluidverbindung des Spülraums (8) und des Spülauslasses (27) bereitgestellt ist.

9. Röhre-in-Röhre-Anordnungsvorrichtung (1) nach einem der Ansprüche 5 bis 8, umfassend ein drittes Verbindungselement (30), welches mit dem zweiten Verbindungselement (20) in einer derartigen Weise reversibel verbindbar ist, dass, nach der Verbindung, die eine oder mehreren Dichtungen (23, 24) des zweiten Verbindungselements (20) extern auf die äußere Röhre (7) gedrückt sind.

10. Röhre-in-Röhre-Anordnungsvorrichtung (1) nach einem der vorhergehenden Ansprüche, wobei das Reaktionsmaterial (4) glasige Kohlenstoff-Flocken und/oder vernickelten Kohlenstoff und/oder nicht vernickelten amorphen Kohlenstoff in Granulat und/oder Graphit in Granulat umfasst.

11. Röhre-in-Röhre-Anordnungsvorrichtung (1) nach einem der vorhergehenden Ansprüche, wobei die innere Röhre (2) aus glasigem Kohlenstoff oder Siliziumkarbid hergestellt ist.

12. Röhre-in-Röhre-Anordnungsvorrichtung (1) nach einem der vorhergehenden Ansprüche, wobei die äußere Röhre (7) aus Aluminiumoxid hergestellt ist.

13. Pyrolytische Einheit (150) für einen Elementaranalysator, umfassend eine Röhre in Röhre Anordnungsvorrichtung (1) nach einem der vorhergehenden Ansprüche.

14. Pyrolytische Einheit (150) nach dem vorhergehenden Anspruch, umfassend Mittel für die Verbindung der äußeren (7) und der inneren (2) Röhre mit dem Ofen (300) an einem weiteren Ende der Röhre-in-Röhre-Anordnungsvorrichtung (1), wobei die Verbindungsmittel Dichtungsmittel (39, 40) umfassen, welche dazu geeignet sind, den Spülraum (8) mit einer weiteren Gasdichtung zu versehen.

15. Pyrolytische Einheit (150) nach Anspruch 14, wobei die Dichtungsmittel weitere Dichtungsmittel (36) umfassen, welche extern auf die äußere Röhre (7) einwirken, um eine weitere Gasdichtung zwischen der zu der Röhre-in-Röhre-Anordnungsvorrichtung (1) externen Umgebung und dem Spülraum (8) bereitzustellen.

16. Pyrolytische Einheit (150) nach Anspruch 14 oder 15,
umfassend ein Halterungselement (37), welches einen Innere-Röhre-Sitz (38"), welcher dazu geeignet ist, die innere Röhre (2) aufzunehmen, und einen Äußere-Röhre-Sitz (38'), welcher dazu geeignet ist, die externe Röhre (7) aufzunehmen, begrenzt, wobei der Innere-Röhre-Sitz (38") mit einer Dichtung (39) versehen ist, welche dazu geeignet ist, extern auf die innere Röhre (2) einzuwirken, und der Äußere-Röhre-Sitz (38') mit einer Dichtung (40) versehen ist, welche dazu geeignet ist, extern auf die äußere Röhre (7) einzuwirken.

17. Pyrolytische Einheit (150) nach dem vorhergehenden Anspruch, wobei das Halterungselement (37) derart eingerichtet ist, dass die Röhre-in-Röhre-Anordnungsvorrichtung (1) in das Halterungselement (37) selbst eingepresst werden kann.

18. Pyrolytische Einheit (150) nach Anspruch 17, wobei das Halterungselement (37) einen Spüleinlass (41) in Fluidverbindung mit dem Spülraum (8) umfasst, wenn die Röhre-in-Röhre-Anordnungsvorrichtung (1) mit dem Halterungselement (37) verbunden ist.

19. Pyrolytische Einheit (150) nach einem der Ansprüche 17 oder 18, wobei das Halterungselement (37) eine Auslassleitung für Probengase (42) in Fluidverbindung mit dem Reaktionsleitungsauslass (6) für den Austritt der Gase aus der Röhre-in-Röhre-Anordnungsvorrichtung (1) umfasst, welche aus der Reaktion der Proben mit dem Reaktionsmaterial (4) resultieren.

20. Pyrolytische Einheit (150) nach Anspruch 19,
umfassend einen pneumatischen Spülkreis (600), welcher mit dem Spüleinlass (41) verbunden ist, um ihm ein inertes Gas zum Spülen des Spülraums (8) bereitzustellen.

21. Pyrolytische Einheit (150) nach einem der vorhergehenden Ansprüche, umfassend einen pneumatischen Trägerkreis (650), welcher mit dem Reaktionsleitungseinlass (5) verbunden ist, um ihm ein inertes Gas zum Tragen der zu analysierenden Probe bereitzustellen.

22. Pyrolytische Einheit (150) nach dem vorhergehenden Anspruch, wobei der pneumatische Spülkreis (600) und der pneumatische Trägerkreis (650) derart eingerichtet sind, dass die Ströme von inertem Gas in der Reaktionsleitung (3) und in dem Spülraum (8) jeweils gegenläufig sind.

23. Pyrolytische Einheit (150) nach Anspruch 22,
wobei der pneumatische Spülkreis (600) und der pneumatische Trägerkreis (650) vollständig getrennt und unabhängig regelbar/steuerbar sind.

24. Elementaranalysator (100), umfassend eine pyrolytische Einheit (150) nach einem der Ansprüche 13 bis 23.

## Revendications

1. Système à tubes doubles (1) pour une unité pyrolytique (150) d'un analyseur d'éléments (100), comprenant :
- un tube intérieur (2) définissant intérieurement un conduit de réaction (3) rempli au moins partiellement d'un matériau de réaction à base de carbone (4), dans lequel le conduit de réaction (3) a une entrée de conduit de réaction (5) et une sortie de conduit de réaction (6) ;
- un tube extérieur (7) faisant office d'enveloppe pour ledit tube intérieur (2), le tube intérieur (2) étant au moins partiellement agencé à l'intérieur du tube extérieur (7) de telle sorte qu'un espace de rinçage (8) est formé dans l'espace entre les tubes intérieur (2) et extérieur (7), ledit espace de rinçage (8) étant destiné à l'écoulement d'un gaz de rinçage ;
- des moyens (12, 20, 30) pour raccorder le tube extérieur (7) au tube intérieur (2) à une extrémité du système à tubes doubles (1), lesdits moyens de raccordement (12, 20, 30) comprenant des moyens d'étanchéité (16, 17, 24, 23) adaptés pour fournir un joint étanche aux gaz entre l'espace de rinçage (8) et le conduit de réaction (3),
- un autre moyen d'étanchéité (34) agencé à une autre extrémité (33) du système à tubes doubles (1) et munissant l'espace de rinçage (8) d'un autre joint étanche aux gaz, de telle sorte que le conduit de réaction (3) est entièrement séparé de l'espace de rinçage (8).

2. Système à tubes doubles (1) selon la revendication 1, dans lequel lesdits moyens d'étanchéité comprennent un premier moyen d'étanchéité (10) agissant extérieurement sur le tube intérieur (2) de manière à fournir un joint étanche aux gaz entre l'entrée de conduit de réaction (5) et l'espace de rinçage (8).

3. Système à tubes doubles (1) selon la revendication 1 ou 2, comprenant un second moyen d'étanchéité (11) agissant extérieurement sur le tube extérieur (7) de manière à fournir un joint étanche aux gaz entre l'environnement externe au système à tubes doubles (1) et l'espace de rinçage (8).

4. Système à tubes doubles (1) selon une quelconque revendication précédente, comprenant un premier élément de raccordement (12) délimitant un siège de tube intérieur (13) adapté pour recevoir ledit tube intérieur (2), le premier élément de raccordement (12) comprenant un ou plusieurs joints (16, 17) agissant extérieurement sur le tube intérieur (2).

5. Système à tubes doubles (1) selon une quelconque revendication précédente, comprenant un second élément de raccordement (20) délimitant un siège de tube extérieur (21) adapté pour recevoir ledit tube extérieur (7), le second élément de raccordement (20) comprenant un ou plusieurs joints (23, 24) agissant extérieurement sur le tube extérieur (7).

6. Système à tubes doubles (1) selon la revendication 5 prise en dépendance de la revendication 4, dans lequel lesdits premier (12) et second (20) éléments de raccordement peuvent être raccordés de manière réversible l'un à l'autre de telle sorte que, après raccordement, les un ou plusieurs joints (16, 17) du premier élément de raccordement (12) sont pressés extérieurement contre le tube intérieur (2).

7. Système à tubes doubles (1) selon la revendication 5 ou 6, dans lequel ledit second élément de raccordement (20) forme une sortie de rinçage (27) en liaison fluidique avec ledit espace de rinçage (8) pour l'échappement du gaz de rinçage de l'espace de rinçage (8).

8. Système à tubes doubles (1) selon la revendication précédente, dans lequel ledit second élément de raccordement (20) est configuré de telle sorte qu'un espace est fourni entre le tube intérieur (2) et le second élément de raccordement (20) en vue d'une liaison fluidique dudit espace de rinçage (8) et de ladite sortie de rinçage (27).

9. Système à tubes doubles (1) selon une quelconque revendication 5 à 8, comprenant un troisième élément de raccordement (30) pouvant être raccordé de manière réversible audit second élément de raccordement (20) de telle sorte que, après le raccordement, les un ou plusieurs joints (23, 24) du second élément de raccordement (20) sont pressés extérieurement contre le tube extérieur (7).

10. Système à tubes doubles (1) selon une quelconque revendication précédente, dans lequel le matériau de réaction (4) comprend des copeaux de carbone vitreux et/ou du carbone nickelé et/ou du carbone amorphe non nickelé en granules et/ou du graphite en granules.

11. Système à tubes doubles (1) selon une quelconque revendication précédente, dans lequel le tube intérieur (2) est réalisé en carbone vitreux ou en carbure de silicium.

12. Système à tubes doubles (1) selon une quelconque revendication précédente, dans lequel le tube extérieur (7) est réalisé en alumine.

13. Unité pyrolytique (150) pour un analyseur d'éléments comprenant un système à tubes doubles (1) selon une quelconque revendication précédente.

14. Unité pyrolytique (150) selon la revendication précédente, comprenant un moyen pour le raccordement des tubes extérieur (7) et intérieur (2) au fourneau (300) à une autre extrémité du système à tubes doubles (1), ledit moyen de raccordement comprenant des moyens d'étanchéité (39, 40) adaptés pour munir l'espace de rinçage (8) d'un autre joint étanche aux gaz.

15. Unité pyrolytique (150) selon la revendication 14, dans laquelle lesdits moyens d'étanchéité comprennent un autre moyen d'étanchéité (36) agissant extérieurement sur le tube extérieur (7) de manière à fournir un autre joint étanche aux gaz entre l'environnement externe au système à tubes doubles (1) et l'espace de rinçage (8).

16. Unité pyrolytique (150) selon la revendication 14 ou 15, comprenant un élément de support (37) délimitant un siège de tube intérieur (38") adapté pour recevoir ledit tube intérieur (2) et un siège de tube extérieur (38') adapté pour recevoir ledit tube externe (7), ledit siège de tube intérieur (38") étant muni d'un joint (39) adapté pour agir extérieurement sur le tube intérieur (2) et ledit siège de tube extérieur (38') étant muni d'un joint (40) adapté pour agir extérieurement sur le tube extérieur (7).

17. Unité pyrolytique (150) selon la revendication précédente, dans laquelle ledit élément de support (37) est configuré de telle sorte que le système à tubes doubles (1) peut être emmanché à force dans l'élément de support (37) lui-même.

18. Unité pyrolytique (150) selon la revendication 17, dans laquelle ledit élément de support (37) comprend une entrée de rinçage (41) en liaison fluidique avec ledit espace de rinçage (8) lorsque le système à tubes doubles (1) est raccordé à l'élément de support (37).

19. Unité pyrolytique (150) selon une quelconque revendication 17 ou 18, dans laquelle ledit élément de support (37) comprend un conduit de sortie des gaz d'échantillons (42) en liaison fluidique avec ladite sortie de conduit de réaction (6) pour l'échappement hors du système à tubes doubles (1) des gaz résultant de la réaction des échantillons avec le matériau de réaction (4).

20. Unité pyrolytique (150) selon une quelconque revendication 19, comprenant un circuit de rinçage pneumatique (600) relié à ladite entrée de rinçage (41) de manière à lui fournir un gaz inerte pour rincer l'espace de rinçage (8).

21. Unité pyrolytique (150) selon une quelconque revendication précédente, comprenant un circuit de transport pneumatique (650) relié à ladite entrée de conduit de réaction (5) de manière à lui fournir un gaz inerte pour transporter l'échantillon à analyser.

22. Unité pyrolytique (150) selon la revendication précédente, dans laquelle le circuit de rinçage pneumatique (600) et le circuit de transport pneumatique (650) sont configurés de telle sorte que les flux de gaz inerte dans le conduit de réaction (3) et dans l'espace de rinçage (8) respectivement sont à contre-courant.

23. Unité pyrolytique (150) selon la revendication 22, dans laquelle ledit circuit de rinçage pneumatique (600) et ledit circuit de transport pneumatique (650) sont entièrement séparés et peuvent être commandés de manière indépendante.

24. Analyseur d'éléments (100) comprenant une unité pyrolytique (150) selon une quelconque revendication 13 à 23.
